# EUROPEAN PATENT SPECIFICATION

(11) **EP 3 748 586 B1**
(45) Date of publication and mention of the grant of the patent: **27.05.2026**
(21) Application number: 20180173.5
(22) Date of filing: 09.10.2014
(51) Int. Cl.: G06T 19/00

(54) **APPARATUS AND METHOD FOR GENERATING AN AUGMENTED REALITY REPRESENTATION OF AN ACQUIRED IMAGE**
VORRICHTUNG UND VERFAHREN ZUR ERZEUGUNG EINER DARSTELLUNG MIT ERWEITERTER REALITÄT VON EINEM ERFASSTEN BILD
APPAREIL ET PROCÉDÉ PERMETTANT DE GÉNÉRER UNE REPRÉSENTATION DE LA RÉALITÉ AUGMENTÉE D'UNE IMAGE ACQUISE

(43) Date of publication of application: 09.12.2020
(62) Divisional of application: 18213858.6
(73) Proprietor: HUAWEI TECHNOLOGIES CO., LTD., Shenzhen, Guangdong 518129 (CN)
(72) Inventor: PEUHKURINEN, Antti Erik, Shenzhen, Guangdong 518129 (CN)
(74) Representative: Thun, Clemens

(56) References cited:
- WO-A1-2011/152764
- US-B1- 8 502 835
- SEYED HESAMEDDIN NAJAFI SHOUSHTARI: "Fast 3D Object Detection and Pose Estimation for Augmented Reality Systems", PHD DISSERTATION, 2006, XP055193250, Retrieved from the Internet <URL:http://mediatum.ub.tum.de/doc/604471/604471.pdf> [retrieved on 20150602]
- JAYNES C O ET AL: "BUILDING RECONSTRUCTION FROM OPTICAL AND RANGE IMAGES", PROCEEDINGS OF THE 1997 IEEE COMPUTER SOCIETY CONFERENCE ON COMPUTER VISION AND PATTERN RECOGNITION. SAN JUAN, PUERTO RICO, JUNE 17 - 19, 1997; [PROCEEDINGS OF THE IEEE COMPUTER SOCIETY CONFERENCE ON COMPUTER VISION AND PATTERN RECOGNITION], LOS ALAM, vol. CONF. 16, 17 June 1997 (1997-06-17), pages 380 - 386, XP000776530, ISBN: 978-0-7803-4236-1
- "LECTURE NOTES IN COMPUTER SCIENCE", vol. 7102, 1 January 2011, SPRINGER BERLIN HEIDELBERG, Berlin, Heidelberg, ISBN: 978-3-54-045234-8, ISSN: 0302-9743, article BASTIAN OEHLER ET AL: "Efficient Multi-resolution Plane Segmentation of 3D Point Clouds", pages: 145 - 156, XP055088929, DOI: 10.1007/978-3-642-25489-5_15
- MIKOLAJCZYK K ET AL: "A Comparison of Affine Region Detectors", INTERNATIONAL JOURNAL OF COMPUTER VISION, KLUWER ACADEMIC PUBLISHERS, BO, vol. 65, no. 1-2, 1 November 2005 (2005-11-01), pages 43 - 72, XP019216488, ISSN: 1573-1405, DOI: 10.1007/S11263-005-3848-X
- DIRK HOLZ ET AL: "Real-Time Plane Segmentation Using RGB-D Cameras", PROCEEDINGS OF 15TH ROBOCUP INTERNATIONAL SYMPOSIUM, 1 July 2011 (2011-07-01), Istanbul, pages 1 - 12, XP055185629, Retrieved from the Internet <URL:http://www.ais.uni-bonn.de/papers/robocup2011_holz.pdf> [retrieved on 20150423]
- CLAUS B ; MADSEN ET AL: "Real-Time Image-Based Lighting for Outdoor Augmented Reality under Dynamically Changing Illumination Conditions", PROCEEDINGS: INTERNATIONAL CONFERENCE ON GRAPHICS THEORY AND APPLICATIONS PROCEEDINGS: INTERNATIONAL CONFERENCE ON GRAPHICS THEORY AND APPLICATIONS, 1 January 2006 (2006-01-01), pages 364 - 371, XP055300591, Retrieved from the Internet <URL:http://vbn.aau.dk/ws/files/4968754/grapp06.pdf>
- HOSHANG KOLIVAND ET AL: "Shadow Generation in Mixed Reality: A Comprehensive Survey", IETE TECHNICAL REVIEW., vol. 32, no. 1, 8 December 2014 (2014-12-08), XX, pages 3 - 15, XP055584864, ISSN: 0256-4602, DOI: 10.1080/02564602.2014.906860
- PESSOA SAULO ET AL: "Illumination Techniques for Photorealistic Rendering in Augmented Reality", PROCEEDINGS OF THE X SYMPOSIUM ON VIRTUAL AND AUGMENTED REALITY (SVR '08); 2008. P. 223-32, 1 January 2008 (2008-01-01), XP055584866, Retrieved from the Internet <URL:https://www.researchgate.net/publication/268397492_Illumination_Techniques_for_Photorealistic_Rendering_in_Augmented_Reality> [retrieved on 20190430]

## Description

### TECHNICAL FIELD

The present invention relates to the field of augmented reality representation of an acquired image in which the augmented reality representation comprises at least one artificial object.

### BACKGROUND

Current augmented reality applications can be simple systems relying on compass information to obtain information of the surroundings, or the applications may use markers placed on real surfaces to place objects on top of a camera image. Mapping techniques can be used for placing 3D objects on such markers. Research has been done in the area of markerless tracking, where objects are detected via camera sensors. Also, research in the area of reconstructing real world 3D shapes by using camera sensors for obtaining depth information has been made during past years.

A major problem in augmented reality applications is how to place partially visible artificial 3D objects over dead corners of a camera image. It is also a problem how to determine real-life shapes, which are not totally visible in the camera image, but which real-life shapes may be needed to correctly place the artificial 3D objects. The PhD dissertation by Seyed Hesameddin Najafi Shoushtari and entitled: "Fast 3D Object Detection and Pose Estimation for Augmented Reality Systems", published in 2006 (http://mediatum.ub.tum.de/ doc/604471/604471.pdf) discloses an augmented reality application wherein from the acquired image, points of interest on each of the surfaces present in the image are detected, the detected features are classified based on models computed from pre-stored models to find the matching model corresponding to the object acquired in the image.

### SUMMARY

The present invention is defined by the appended independent claims.

It is an object of the present invention to provide an apparatus or system, which enables a user to place artificial 3D objects in an acquired image while taking into account real-life shapes in order to correctly place the artificial objects.

The foregoing and other objects are achieved by the features of the independent claims. Further implementation forms are apparent from the dependent claims, the description and figures.

According to a first aspect, there is provided an apparatus comprising: an image obtaining unit configured to acquire an image; a display for presenting an image; and processing circuitry configured to: determine surfaces occurring in the acquired image; create virtual markers in the acquired image, each virtual marker representing an area of interest in the acquired image; map the virtual markers to the determined surfaces to derive virtually marked surfaces; map the virtually marked surfaces of the acquired image to corresponding virtually marked surfaces of a pre-calculated 3D model to derive a shape scene model; and generate, based on the acquired image and the shape scene model an augmented reality representation of the acquired image, the augmented reality representation comprising at least one artificial object.

For an artificial object being part of an augmented reality representation, one or more parts of the object may be clipped. The clipping can be based on the shape scene model, which may comprise real world surface data acquired from the pre-calculated 3D model. When clipping parts of an artificial object being part of an augmented reality representation, the resulting image may have a realistic look to an end user.

In a first possible implementation form of the apparatus according to the first aspect, the apparatus further comprises a geographical position unit configured to obtain the geographical position of the apparatus when acquiring an image. This has the advantage that the geographical position can be determined every time it is needed and does not need to be determined by an external unit.

According to the invention, the processing circuitry is further configured to select, based on the geographical position of the apparatus when acquiring the image, a pre-calculated 3D model with virtually marked surfaces.

The pre-calculated 3D models may represent real world 3D images being pre-processed to have recognized surfaces mapped with virtual markers, where the recognized surfaces matches the real world surfaces of the 3D images. When mapping the virtually marked surfaces of the acquired image to a pre-calculated 3D model with virtually marked surfaces, where the pre-calculated 3D model is a model of a real world image corresponding to the acquired image, the location of the virtually marked surfaces in the acquired image may be mapped or connected with the real world location of the virtually marked surfaces in the pre-calculated real world 3D model. The real world surface location information combined with the image surface location according to the invention, the processing circuitry is further configured to determine lighting conditions for at least one artificial object comprised in the augmented reality presentation. This achieves a much more realistic representation of the artificial object in the augmented reality presentation.

In a fourth possible implementation form of the apparatus according to the third implementation form of the first aspect, the processing circuitry is further configured to determine the lighting conditions based on sun light shadow mapping technique and/or ambient occlusion technique.

In a fifth possible implementation form of the apparatus according to the first aspect as such or according to any of the preceding implementation forms of the first aspect, the apparatus comprises an orientation unit configured to obtain orientation and location of the apparatus when acquiring an image; and the processing circuitry is further configured to create the virtual markers in the acquired image based on the apparatus's orientation and location when acquiring the image. This has the advantage that a more precise placement of the artificial object in the augmented reality presentation can be achieved

According to the invention, the apparatus comprises an orientation unit configured to obtain orientation and location of the apparatus when acquiring an image; and the processing circuitry is configured to generate a depth map of the acquired image and to determine the surfaces in the acquired image based on the depth map, and the apparatus's orientation and location when acquiring the image. The depth map provides the additional advantage that distances between different objects in the acquired images can be determined and that a more precise determination of known objects in the acquired images can be achieved.

In a seventh possible implementation form of the apparatus according to the fifth or the sixth implementation form of the first aspect, then for the creation of the virtual markers in the acquired image, the processing circuitry is configured to: recognize affine regions or areas of interest in the acquired image; track affine regions or areas of interest from multiple images corresponding to the acquired image and being acquired over a time period; group the tracked affine regions or areas on interest; and create virtual markers with information of apparatus's location and orientation for the acquired image based on the obtained grouped affine regions.

By tracking and grouping affine regions or areas of interest from multiple images acquired over a time period, a more robust detection of areas of interest, which can be used for placing of virtual markers, can be performed.

In an eight possible implementation form of the apparatus according to the sixth or to the sixth and the seventh implementation form of the first aspect, then for determination of the surfaces in the acquired image, the processing circuitry is configured to: create a point cloud for the acquired image based on the acquired image, the depth map and the orientation and location of the apparatus when acquiring the image; collect point clouds of multiple images corresponding to the acquired image and being acquired over a time period; process the collected point clouds by use of segmentation to obtain a segmented data structure; and reconstruct surfaces with information of apparatus's location and orientation based on the segmented data structure.

In a ninth possible implementation form of the apparatus according to the eight implementation form of the first aspect, the segmentation is an Octree segmentation process, and the segmented data structure is an Octree data structure.

By using depth maps, point clouds and segmentation, a virtual 3D presentation of surfaces within the acquired image may be obtained. These virtual created 3D surfaces, when mapped with virtual markers, can then be mapped to the real world 3D surfaces with virtual markers provided by the pre-calculated 3D models.

In a tenth possible implementation form of the apparatus according to the first aspect as such or according to any of the preceding implementation forms of the first aspect, the processing circuitry is configured to generate a depth map of the acquired image; and to generate the augmented reality representation based on the acquired image, the generated depth map, and on the derived shape scene model.

In an eleventh possible implementation form of the apparatus according to the first aspect as such or according to any of the first, the second, the fourth, the fifth, the seventh, the eight, or the ninth implementation forms of the first aspect, the processing circuitry is configured to generate a depth map of the acquired image; generate an enhanced depth map for the acquired image based on the generated depth map and the determined surfaces; and to generate the augmented reality representation based on the acquired image, the generated enhanced depth map, and on the derived shape scene model.

By producing an enhanced depth map based on an original depth map and determined or reconstructed surfaces of the acquired image, noise can be removed from the original depth map.

In a twelfth possible implementation form of the apparatus according to the first aspect as such or according to any of the preceding implementation forms of the first aspect, the apparatus further comprises an interface and a cache for receiving and storing the pre-calculated 3D models with virtually marked surfaces. The interface, which may be a wireless interface, may connect to external data services, from which pre-calculated 3D models can be obtained. The obtained pre-calculated 3D models or part of the obtained 3D models may be stored in a local database and in a local cache, both being part of the processing circuitry.

In a thirteenth possible implementation form of the apparatus according to the first aspect as such or according to any of the preceding implementation forms of the first aspect, the processing circuitry is configured to generate the augmented reality representation of the acquired image by use of a RGB bitmap representation of the acquired image. The RGB bitmap representation may be used as a replacement of the original acquired image when generating the augmented reality representation of the acquired image.

According to second aspect, there is provided a method for generating an augmented reality representation of an acquired image. The method comprises: acquiring an image; determining surfaces occurring in the acquired image; creating virtual markers in the acquired image, each virtual marker representing an area of interest in the acquired image; mapping the virtual markers to the determined surfaces to derive virtually marked surfaces; mapping the virtually marked surfaces of the acquired image to corresponding virtually marked surfaces of a pre-calculated 3D model to derive a shape scene model; and generating, based on the acquired image and the shape scene model, an augmented reality representation of the acquired image, the augmented reality representation comprising at least one artificial object.

### BRIEF DESCRIPTION OF THE DRAWINGS

Fig. 1 is a block diagram illustrating hardware components and processing circuitry configurations of an apparatus according to an embodiment of the invention, where the apparatus is wirelessly connected to an external data services, and where the processing circuitry configurations comprise Operating System Middleware configurations and Shape Detector System configurations;
Fig. 2 is a block diagram of processing circuitry configurations according to an embodiment of the apparatus of Fig. 1, showing different processing circuitry configurations of the Shape Detector System;
Fig. 3 is a block diagram illustrating a Virtual Marker Detector configuration being part of the Shape Detector System configurations according to an embodiment of the invention;
Fig. 4 is a block diagram illustrating a Surface Reconstructor configuration being part of the Shape Detector System configurations according to an embodiment of the invention;
Fig. 5 is a block diagram illustrating a 3D Model Database configuration being part of the Shape Detector System configurations according to an embodiment of the invention;
Fig. 6 is a block diagram illustrating a Virtual Marker Surface Creator configuration being part of the Shape Detector System configurations according to an embodiment of the invention;
Fig. 7 is a block diagram illustrating an Image Depth Enhancer configuration being part of the Shape Detector System configurations according to an embodiment of the invention;
Fig. 8 is a block diagram illustrating a Surface Connector configuration being part of the Shape Detector System configurations according to an embodiment of the invention;
Fig. 9 is a block diagram illustrating a Shape Scene configuration being part of the Shape Detector System configurations according to an embodiment of the invention;
Figs. 10a-10c illustrate creation of virtual markers in an acquired image according to an embodiment of the invention;
Figs. 11a-11d illustrate determination of surfaces occurring in an acquired image according to an embodiment of the invention;
Figs. 12a-12f illustrate derivation of a Shape Scene and generation of an augmented reality representation of an acquired image according to an embodiment of the invention;
Fig. 13 shows an original acquired image;
Fig. 14 shows the original image of fig. 13 with three artificial advertisement objects added to the image;
Fig. 15 shows an augmented reality representation of the image of Fig. 13 according to an embodiment of the invention, the augmented reality representation including two of the artificial objects of Fig. 14;
Fig. 16 shows the augmented reality representation of Fig. 15 including a third artificial advertisement object being created according to an embodiment of the invention; and
Fig. 17 shows a flow diagram of a method for generating an augmented reality representation of an acquired image according to an embodiment of the present invention.

### DETAILED DESCRIPTION OF EMBODIMENTS OF THE PRESENT INVENTION

Embodiments of the present invention provide an apparatus or a computing device system that may be used for generating an augmented reality presentation of one or more acquired images, where artificial 3D objects can be added to real video image feeds or still images acquired from a camera or image obtaining unit, so that a user may see the artificial objects naturally blended to the real image(s). This natural blend of artificial and natural elements in image(s) may enable creation of new user experiences, like new kind of advertisement and user interface possibilities.

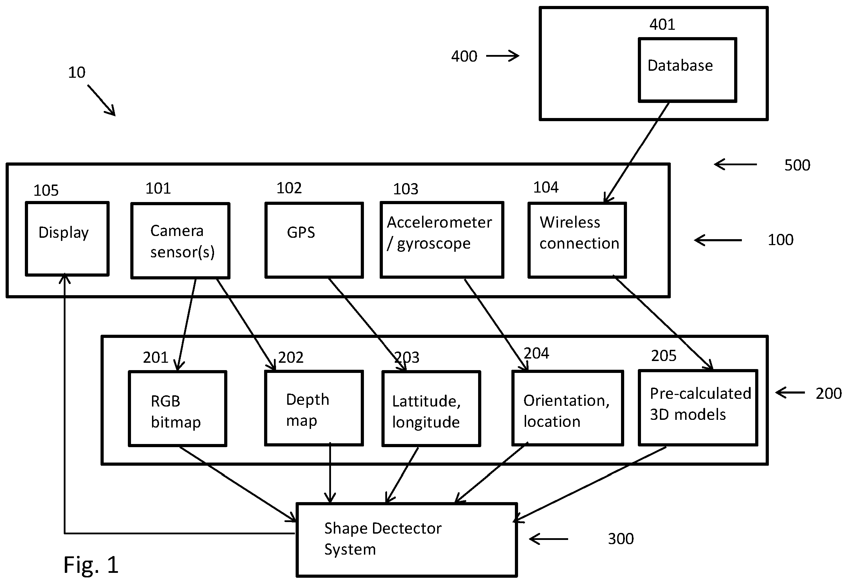

Fig. 1 is a block diagram illustrating hardware components 100 and processing circuitry configurations 200, 300 of an apparatus 10 or system according to an embodiment of the invention. The apparatus 10 may be wirelessly connected to external data services 400, such as via an internet connection 500. The apparatus 10 has a hardware device or component part 100, and a processing circuitry part with one or more processors holding Operating System Middleware configurations 200 and Shape Detector System configurations 300.

The hardware component part 100 of the apparatus 10 may hold one or more camera sensors or image obtaining units 101, a display 105 for presenting images, a geographical position unit, GPS, 102, a device or apparatus orientation unit 103, which may hold an accelerometer and/or gyroscope, and a wireless connection unit 104. The connection unit 104 collects data via the wireless connection 500 from a database 401 hold by the external data services 400.

The Operating System Middleware configurations 200 hold processing configurations for providing RGB bitmaps 201 and depth maps 202 from images acquired via the camera sensor(s) or image obtaining unit(s) 101; for providing data representing the geographical position of the apparatus 10, such as latitude and longitude data 203, based on input from the geographical position unit 102; for providing data representing the apparatus's 10 orientation and/or location 204 based on input from the orientation unit 103; and for providing pre-calculated or pre-processed real world 3D models or image data 205 being received through the wireless connection unit 104 and representing real world 3D images being pre-processed to have recognized surfaces mapped with virtual markers.

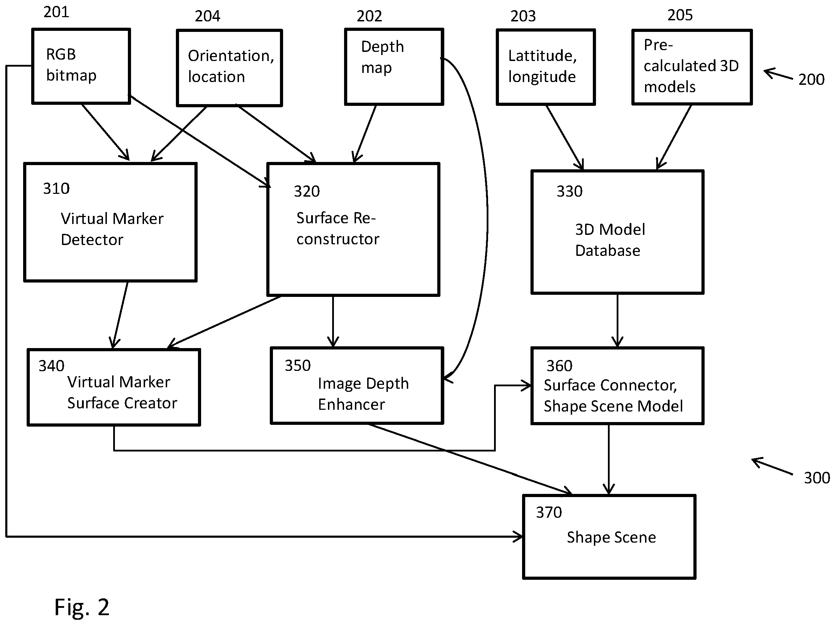

Fig. 2 is a block diagram of the processing circuitry configurations 200, 300 of the apparatus 10 of Fig. 1. The configurations of the Operating System Middleware 200 are the same as discussed in connection with Fig. 1, but Fig. 2 shows a more detailed block diagram of the processing configurations of the Shape Detector System 300, which includes:
A Virtual Marker Detector 310 for detecting points or areas of interest in an acquired image, and for placing virtual markers to the detected points or areas of interest, thereby creating virtual markers in the acquired image. A point of interest may be a point, which can be recognized from an image by well-defined computational methods, and a placed virtual marker may have a location and an orientation in space. The Virtual Marker Detector 310 may operate based on the acquired image or on RGB bitmap data 201 for the image, and may further operate based on data for the apparatus's 10 orientation and location 204 when acquiring the image.

A Surface Reconstructor 320 for determining surfaces occurring in the acquired image.

The determined surfaces may be bigger atomic surfaces areas, like planar polygons, cylinder arc, spheres etc. The Surface Reconstructor 320 operates based on the acquired image or on RGB bitmap data 201 for the image, and further operates based on depth map data 202 for the image and on data for the apparatus's 10 orientation and location 204 when acquiring the image.

A 3D Model Database 330, which can be a local database with and a cache, which receives and stores pre-calculated 3D models or images 205 being pre-processed to have recognized surfaces mapped with virtual markers. The 3D models being used for further processing are determined or selected based on the geographical position, such as latitude and longitude 203 of the apparatus 10 when acquiring an image.

A Virtual Marker Surface Creator 340 for mapping or connecting detected points or areas of interest being virtual marked and being output from the Virtual Marker Detector 310 to the reconstructed surfaces being output from the Surface Reconstructor 320, to thereby obtain locally created virtually marked surfaces. The data being output from Surface Creator 340 is similar to or of similar nature as the data representing pre-calculated 3D Models stored in database 330.

An Image Depth Enhancer 350 is an optional component, which may produce enhanced versions of an acquired image from the depth map data 202 by using the reconstructed surface data 320. The Image Depth Enhancer 350 may remove noise or other distracting elements from the depth image of 202.

A Surface Connector 360 for connecting or mapping the locally created virtually marked surfaces from Virtual Marker Surface Creator 340 to corresponding pre-calculated virtually marked surfaces selected from the 3D Model Database 330 to derive a Shape Scene Model for an acquired image. The mapping performed by use of the Surface Connector 360 makes it possible to have the right perspective when inserting an artificial object in an acquired image, since the combination of the locally created marked surfaces and the pre-calculated marked surfaces holds real world information for surfaces seen in the original image obtained from the pre-calculated virtually marked surfaces.

A Shape Scene 370 for combining acquired image data or RGB bitmap data 201 with the mapped surface data with virtual markers being output as a Shape Scene Model from the Surface Connector 360. The Shape Scene 370 may also combine depth map data 202 or enhanced depth map data 350 with acquired image data or RGB bitmap data 201 and the mapped surface data being output from the Surface Connector 360.

The combined data obtained by the Shape Scene 370 may be used for generating an augmented reality representation of an acquired image, where the augmented reality representation comprises one or more artificial objects being inserted in the acquired image. The augmented reality representation of the acquired image may be presented on the display 105.

The combined data obtained by the Shape Scene 370 may also be used for create or determine lighting to the artificial objects. Thus, it is preferred that the processing circuitry configuration 300 is further configured to determine lighting conditions for at least one artificial object comprised in the augmented reality presentation. Here, the processing circuitry may be configured to determine the lighting conditions based on sun light shadow mapping technique and/or ambient occlusion technique.

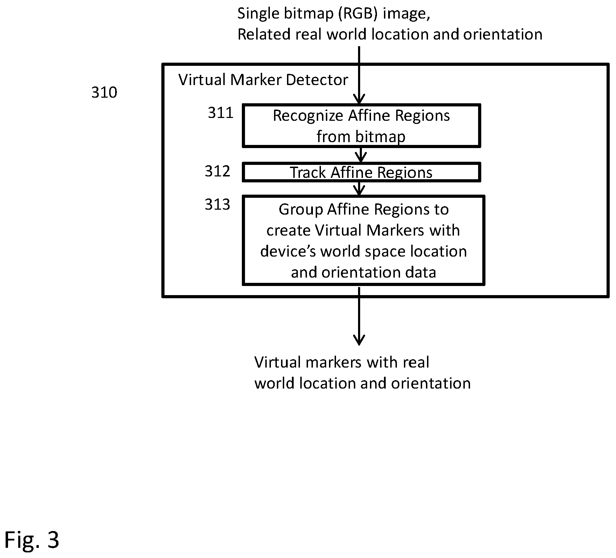

Fig. 3 is a block diagram illustrating a Virtual Marker Detector configuration 310 according to an embodiment of the invention. The Virtual Marker Detector 310 may be configured to recognize affine regions or areas of interest in the acquired image or a RGB bitmap 201 of the image 311; track affine regions or areas of interest from multiple images corresponding to the acquired image and being acquired over a time period 312; and group the tracked affine regions or areas on interest and create virtual markers with information of apparatus's location and orientation for the acquired image based on the obtained grouped affine regions 313. Virtual Marker Detector 310 may detect points of interest from the image data 311, group the points of interests found to create more robust detected areas 312, and place virtual markers to the areas 313. A Virtual marker may have a specific nature which comes from the points or areas of interest. This means that if the same area is found a second time when processing images taken from the same location, most probably a) a virtual marker is placed to the same area and b) it will have similar nature. This feature makes it possible to track specific points on image's real world shapes for example in a video stream.

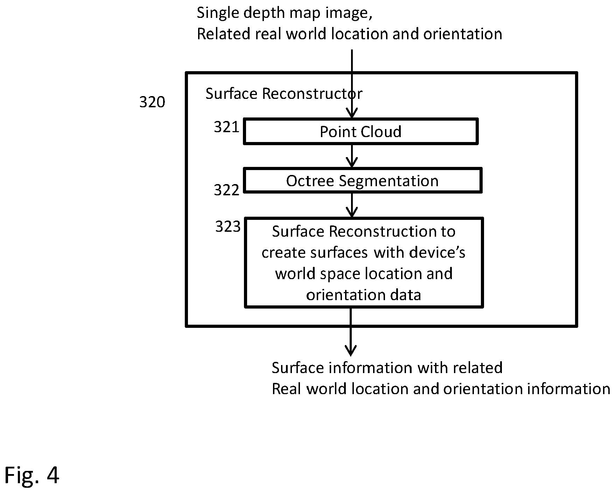

Fig. 4 is a block diagram illustrating a Surface Reconstructor configuration 320 according to an embodiment of the invention. The Surface Reconstructor 320 may be configured to create a point cloud for an acquired image based on the acquired image or a RGB bitmap 201 of the image, the depth map and the orientation and location of the apparatus when acquiring the image, and to collect point clouds of multiple images corresponding to the acquired image and being acquired over a time period 321; process the collected point clouds by use of segmentation to obtain a segmented data structure 322; and reconstruct surfaces with information of apparatus's location and orientation based on the segmented data structure 323. The segmentation 322 may be an Octree segmentation process, and the segmented data structure may be an Octree data structure.

The Surface Reconstructor 320 may create and maintain a point cloud 321 from depth map 202, orientation, location 204 and RGB bitmap data 201.The point cloud may be processed by Octree Segmentation 322. The Octree data structure may be using the same space as the point cloud 321. Octree segmentation may be used to store data from the solid shape information. Surface reconstruction 323 may be made from the octree segmentation 322. Surface reconstruction 323 may find larger atomic surfaces areas, like planar polygons, cylinder arc, sphere etc. based on the octree 322 information. The Surface Reconstructor 320 may also use other data structures that point cloud and octree data structures in the processing.

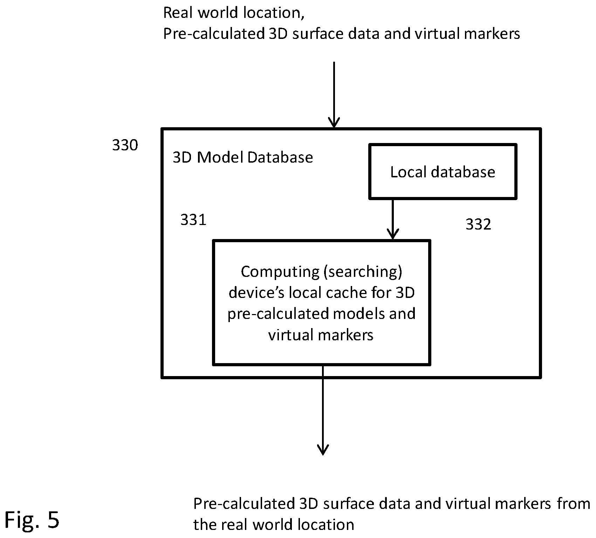

Fig. 5 is a block diagram illustrating a 3D Model Database 330 configuration according to an embodiment of the invention. The 3D Model Database 330 may comprises a local database 332 and a local cache 331, which can receive data related to the apparatus's 10 geographical position or location 203. Pre-calculated 3D model data may be received from external services 400, 401 and may be similar to or of similar nature as the data obtained from the Surface Reconstructor 320. The 3D model data has been pre-processed to have matching surfaces to real world surfaces. The 3D model data with virtual markers may be collected from cache data 331. The 3D model data can be locally stored in the local database 332, which will be faster available for the local cache 331 when compared to the external data services 400. For example local database 332 can have 3D model data from (e.g. all the) common world locations.

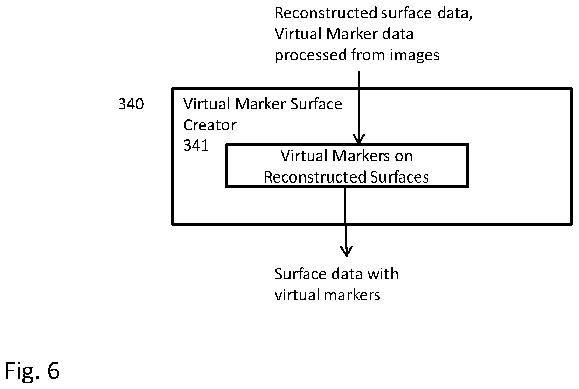

Fig. 6 is a block diagram illustrating a Virtual Marker Surface Creator 340 configuration according to an embodiment of the invention. Virtual Marker Surface Creator 340 connects information from Virtual Marker Detector 310 to the Reconstructed Surfaces 320. The end results 341 are the virtually marked surfaces. The data being output from Surface Creator 340 may be similar to or of similar nature as the data representing pre-calculated 3D Models, which may be stored in database 330, 332 or cache 331.

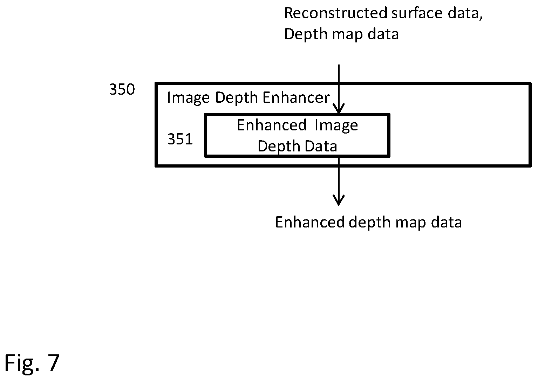

Fig. 7 is a block diagram illustrating the Image Depth Enhancer 350 configuration according to an embodiment of the invention. The Image Depth Enhancer 350 is an optional component, which can produce enhanced versions from the depth map data 202 by using the reconstructed surface data 323.

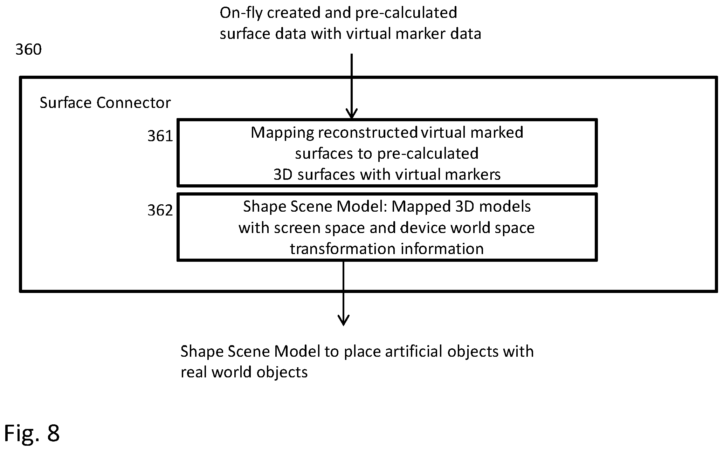

Fig. 8 is a block diagram illustrating a Surface Connector 360 configuration according to an embodiment of the invention. The Surface Connector 360 may comprise a mapping configuration 361 for mapping the locally created virtual marked surfaces from Virtual Marker Surface Creator 340 to corresponding pre-calculated virtual marked surfaces selected from the real world 3D Model Database 330. When mapping the two virtual marked surfaces, location and/or orientation of the virtual markers in the acquired image based on the locally created virtual marked surfaces are mapped or connected with the real world location and/or orientation of the virtual markers in the pre-calculated real world 3D surfaces with virtual markers. The output of the mapping configuration 361 is an application interface or Shape Scene Model 362 holding the mapped surfaces with both image and real world information of virtual marker location and/or orientation. The real world location information combined with the image location information makes it possible to know where window corners, wall corners, etc. are at the acquired image, which again enables placing of artificial objects taking into account the real world data.

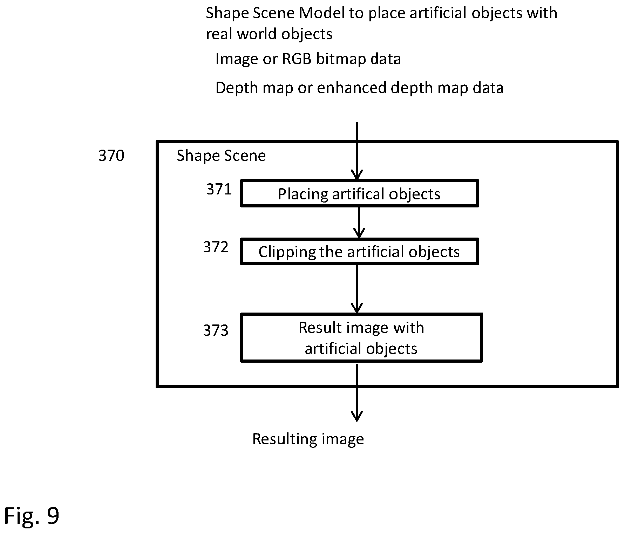

Fig. 9 is a block diagram illustrating a Shape Scene 370 configuration according to an embodiment of the invention. The Shape Scene 370 combines the mapped surfaces holding virtual marker data from the application interface or Shape Scene Model 362 with the acquired image or a RGB bitmap 201 of the image and with a depth map 202 or an enhanced depth map 350, 351. The Shape Scene 370 including real world 3D models surfaces matched to surfaces calculated from the acquired image is used for placing artificial objects in the image taking into account the real world location and/or orientation information of surfaces in the image 371. The information of the pre-calculated real-world surfaces also enables clipping of the artificial objects, if necessary, when placing these in the image 372. The resulting output is an augmented reality representation of the acquired image including one or more natural looking and arranged artificial objects.

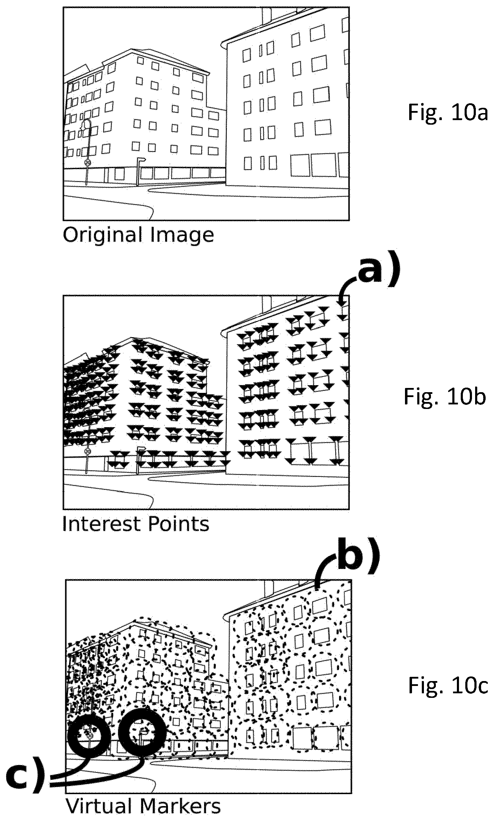

Figs. 10a-10c illustrate creation of virtual markers in an acquired image according to an embodiment. In order to create or insert virtual markers in an image, points or areas of interest may be determined. A point of interest may be a point that can be recognized from an image by some well-defined computational methods. These points of interest may be used again as an input for other computational methods to create virtual markers. A virtual marker may have a location and an orientation in the space represented by the image.

The Virtual Marker Detector 310 may be used for creating the virtual markers in the image. Fig. 10a shows as an example a bitmap representation of the original acquired image, in Fig. 10b the triangles, one of which is labelled a), represent points of interest in the acquired image, and in Fig. 10c, the dotted circles, one of which is labelled b), represent virtual markers formed at areas of interest including one or more of the points of interest, a). In Fig. 10c, the full circles labelled c) show examples of interest points which may be detected more specifically by the apparatus 10 or system of the invention because they are commonly found traffic signs, and matching to computational methods recognizing traffic signs.

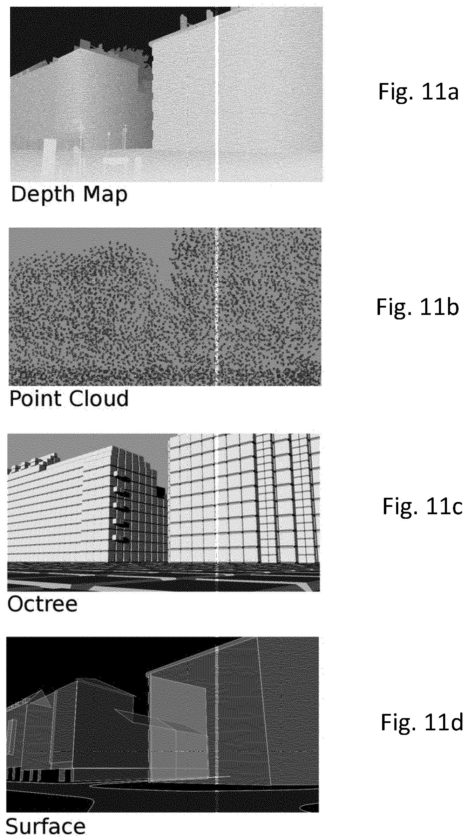

Figs. 11a-11d illustrate determination and reconstruction of surfaces occurring in an acquired image according to an embodiment of the invention. The Surface Reconstructor 320 of Fig. 4 may be used for producing the reconstructed surfaces. Fig. 11a shows a depth map presentation of the image of Fig. 10a, and camera depth map sensors 101 and the depth map configuration 202 may be used to obtain the image of Fig. 11a. The depth map presentation of Fig. 11a may be stored locally within the apparatus 10, and a point cloud database can be produced 321, see Fig. 11b. The point cloud data may be used to create an Octree database 322, see Fig. 11c, where noise from the original images is greatly reduced and strongest point cloud in space create solid forms. This Octree information is then processed to create a surface database 323, see Fig. 11d, which may contain surface shapes from the acquired image being modelled as real life surfaces.

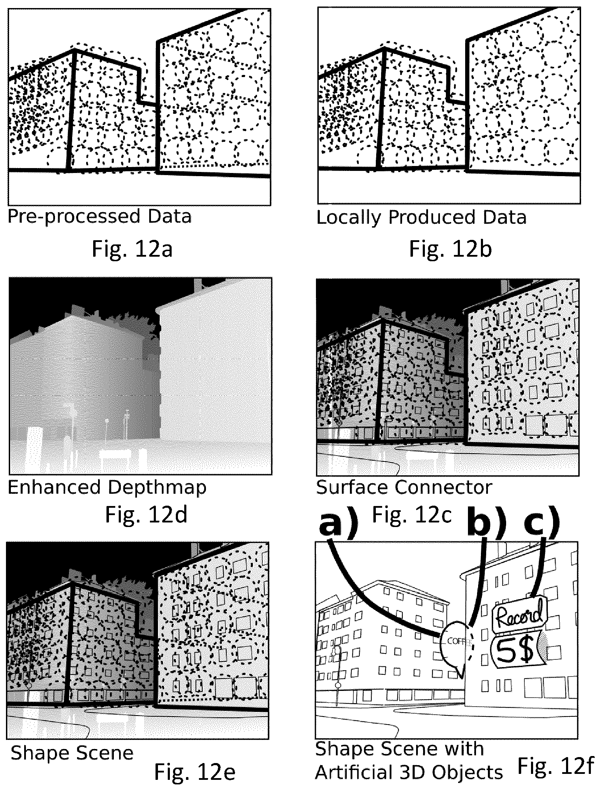

Figs. 12a-12f illustrate derivation of a shape scene and generation of an augmented reality representation of an acquired image according to an embodiment of the invention. The virtual marker image data, see Fig. 10c, and the reconstructed surface image data, see Fig. 11d, are mapped to create a Locally Produced Data, see Fig. 12b, representing locally created virtually marked surfaces. This mapping may be performed by use of the Virtual Marker Surface Creator 340. Fig. 12a is an image showing Pre-processed Data corresponding to the Locally Produced Data of Fig. 12b, where the Pre-processed Data can be obtained from the 3D Model Database 330 or from the external services 400, and a virtually marked pre-calculated 3D model corresponding to the acquired image may be selected based on the geographical position of the apparatus 10, when acquiring the image. The Pre-processed Data, Fig. 12b, obtained from the local database 330 or external services 400 may then be mapped to match the Locally Produced Data, Fig. 12a, by use of the Surface Connector 360, the output of the matching being illustrated in Fig. 12c. Here, matching may include that virtual marker location information of the real world Pre-Processed Data is connected with the virtual markers of the Locally Produced Data. This makes it possible to know where window corners, wall corners, etc. real world information are at the image data represented by the Locally Produced Data.

An Enhanced Depthmap, see Fig. 12d, can be produced by using the Locally Produced Data illustrated in Fig. 12b and the Pre-Processed Data illustrated in Fig. 12a. An enhanced depth map processing may use these two sets of data in addition to depth map data from the acquired image, 202, to create the Enhanced Depthmap. The Enhanced Depthmap obtained this way may be a more accurate presentation from a real world depth map when compared to the image depth map, 202. An enhanced image depth map may also be obtained as described in connection with the Image Depth Enhancer 350.

Fig. 12e illustrates a Shape Scene, which may be created by connecting the Surface Connector data, Fig. 12c, being output from the Surface Connector 360, with the Enchanced Depthmap data of Fig. 12d, or depth map data 202 or enhanced depth map data 350, together with the acquired image data or RGB bitmap data 201. The information comprised by the Shape Scene, Fig. 12e, 370, enables placing artificial objects in the acquired image taking into account the real world surfaces, which may include clipping part of the artificial objects, see Fig. 12f. In Fig. 12f label a) marks a first artificial object set in the middle of the image, and label c) marks a second artificial object set to the right in the image. Label b) in Fig. 12f marks an area that has been detected to be behind a real world object, which in this case is a building existing on the right side of the image. Here, a part of the artificial object a) is clipped because it is behind the real object. By use of the Shape Detector System 300, artificial 3D objects may be placed in an image scene to look for a user as being a natural part of the image.

The apparatus 10 or system described herein could be used to show advertisement for a user in a user interface of an augmented reality application. Artificial 3D advertisement could be naturally part of a camera image or camera video feed shown by the user interface. Artificial 3D advertisement can be placed and rotated in relation to objects found from the image or video stream, like the wall of a building, window glass etc.. Also real-life mimicking ambient light direction, color and fog effects could be placed to make the augmented reality 3D user interface more real. The apparatus 10 or system of the present invention could be part of for example wearable or mobile or other similar computing systems.

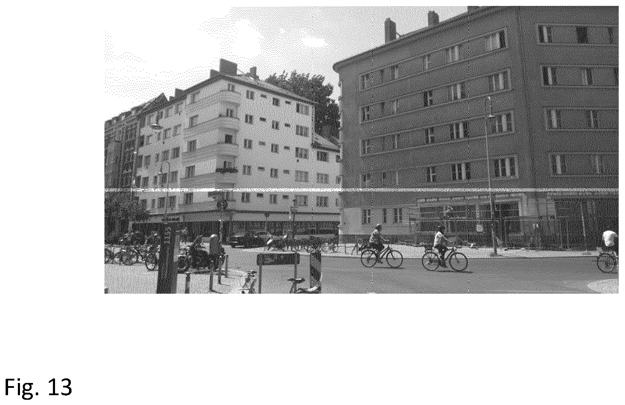

Fig. 13 shows an original acquired image, corresponding to the bitmap presentation of Fig. 10a.

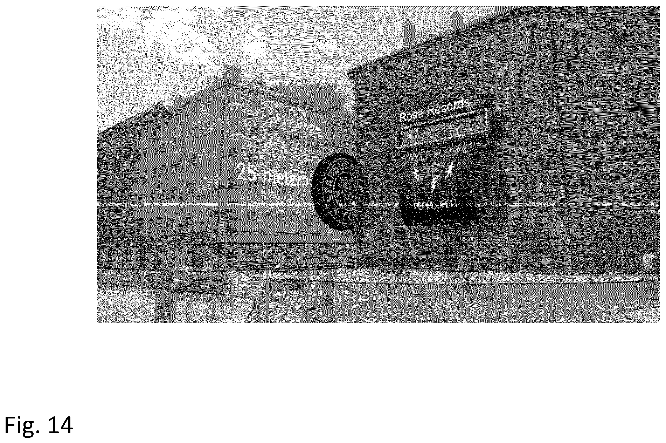

Fig. 14 shows an overlay image of the original image of Fig. 13 with a shape scene with three artificial advertisement objects according to Fig. 12f.

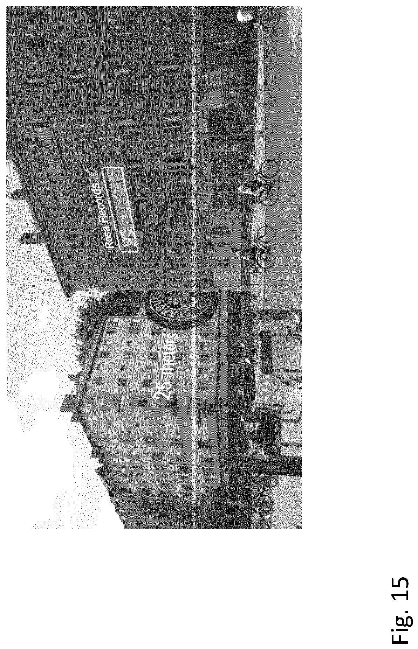

Fig. 15 shows an augmented reality representation of the image of Fig. 13, where the augmented reality representation includes two of the artificial objects of Fig. 14. In Fig. 15 the two artificial advertisement objects have been added to the acquired image using the Shape Detector System 300 of the present invention resulting in a natural looking image. Both artificial 3D objects in Fig. 15 can be seen as an advertisement to the user. The first artificial element in the middle of Fig. 15 has been clipped by the Shape Detector System 300 of the present invention so that the artificial 3D objects looks as a natural part of the image for the user. Advertisements may be personalized according to each user.

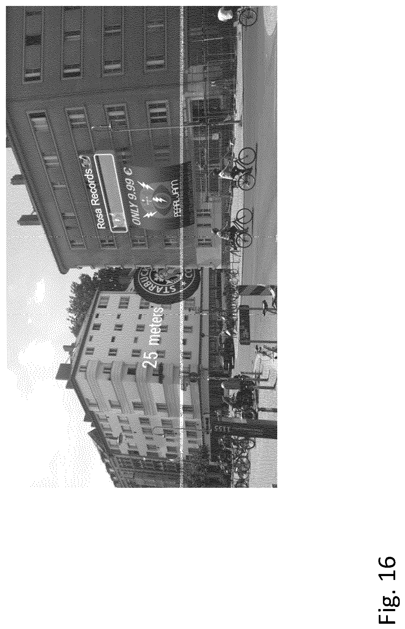

Fig. 16 shows the augmented reality representation of Fig. 15 including a third artificial advertisement object being created according to an embodiment of the invention. In Fig. 16 the second advertisement object ("Rosa Records") to the right of Fig. 15 created a new and third artificial advertisement object ("Only 9.99 €") when a user selected the second advertisement object on the right. Here, the second advertisement worked as an application. User selection could happen for example in the user interface of wearable computing glasses by having the user looking at the artificial object for a while, pointing at the artificial object with a finger or doing some gesture. More complex applications like the ones found from desktop computing devices could be arranged in a similar way.

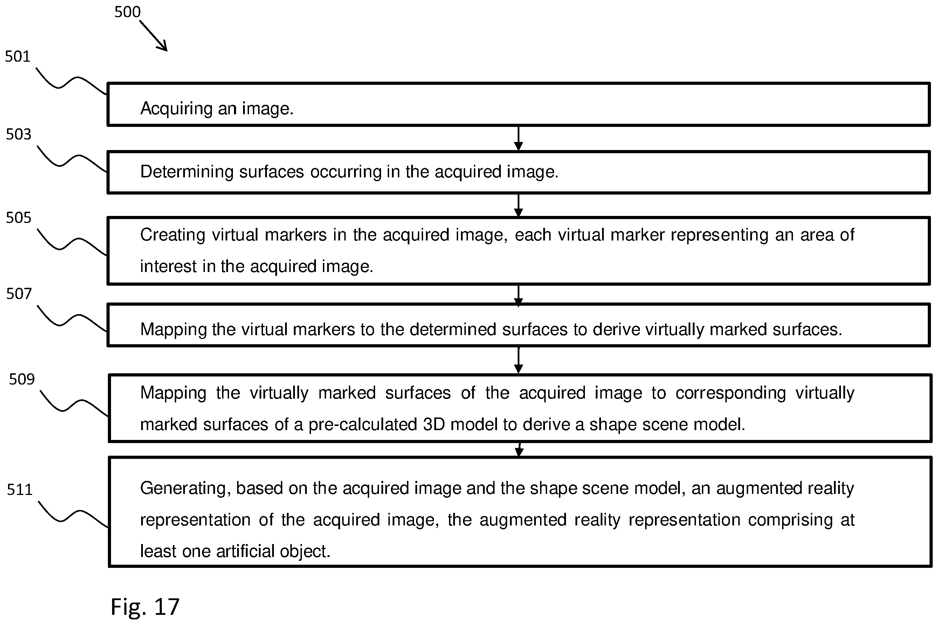

Fig. 17 shows a flow diagram of method 500 for generating an augmented reality representation of an acquired image according to an embodiment of the present invention. The method 500 may be performed by apparatuses according to embodiments of the present invention, such as the apparatus 10. The method comprises acquiring 501 an image, determining 503 surfaces occurring in the acquired image, creating 505 virtual markers in the acquired image, each virtual marker representing an area of interest in the acquired image, mapping 507 the virtual markers to the determined surfaces to derive virtually marked surfaces, mapping 509 the virtually marked surfaces of the acquired image to corresponding virtually marked surfaces of a pre-calculated 3D model 205 to derive a shape scene model 360, 362, and generating 511, based on the acquired image and the shape scene model 360, 362, an augmented reality representation of the acquired image, the augmented reality representation comprising at least one artificial object.

Although the present invention has been described with reference to specific features and embodiments thereof, it is evident that various modifications and embodiments can be made thereto without departing from the scope of the invention. The specification and drawings are, accordingly, to be regarded as an illustration of the invention as defined by the appended claims, and are contemplated to cover any and all modifications, variations, combinations or equivalents that fall within the scope of the present invention.

The term "comprising" as used in the appended claims does not exclude other elements or steps. The term "a" or "an" as used in the appended claims does not exclude a plurality.

## Claims

1. An apparatus comprising:
∘ an image obtaining unit (101) configured to acquire an image;
∘ a display (105) for presenting the acquired image; and
∘ a processing circuitry (200, 300) configured to:
• generate a depth map (202) of the acquired image,
• determine surfaces occurring in the acquired image based on the depth map (202) and on data for the apparatus's (10) orientation and location 204 when acquiring the image;
• create virtual markers in the acquired image, each virtual marker representing an area of interest in the acquired image;
• map the virtual markers to the determined surfaces to derive virtually marked surfaces;
• select, from a 3D Model Database, a pre-calculated 3D model (205) with virtually marked surfaces based on a geographical position of the apparatus (10) when acquiring an image;
• map the virtually marked surfaces of the acquired image to corresponding virtually marked surfaces of the selected pre-calculated 3D model (205) to derive a shape scene model (360, 362);
• determine lighting conditions for at least one virtual object comprised in an augmented reality presentation, and
• generate the augmented reality representation based on the acquired image, the generated depth map (202), the derived shape scene model (360, 362) and the lighting conditions for the at least one virtual object comprised in the augmented reality presentation.

2. The apparatus of claim 1, further comprising a geographical position unit (102) configured to obtain the geographical position of the apparatus when acquiring the image.

3. The apparatus of claim 1, wherein the processing circuitry (200, 300) is further configured to determine the lighting conditions based on a sun light shadow mapping technique and/or an ambient occlusion technique.

4. The apparatus of one of the preceding claims, wherein
the apparatus comprises an orientation unit (103) configured to obtain the orientation and the location (204) of the apparatus when acquiring the image; and
the processing circuitry (200, 300) is further configured to create the virtual markers in the acquired image based on the apparatus's orientation and location when acquiring the image.

5. The apparatus of one of the preceding claims, wherein:
∘ in a first alternative, the apparatus according any of claims 1 - 3 comprises an orientation unit (103) configured to obtain an orientation and a location (204) of the apparatus when acquiring the image,
∘ in a second alternative instead of the first alternative, the apparatus according to claim 4 comprises the orientation unit (103) configured to obtain the orientation and the location (204) of the apparatus when acquiring the image; and
∘ in the first and second alternative, the processing circuitry (200, 300) is configured to determine the surfaces in the acquired image based on the depth map (202) and the apparatus's orientation and location (204) when acquiring the image.

6. The apparatus of claim 4 or 5, wherein for the creation of the virtual markers in the acquired image, the processing circuitry (200, 300) is configured to:
recognize affine regions (311) or areas of interest in the acquired image;
track affine regions (312) or areas of interest from multiple images corresponding to the acquired image and being acquired over a time period;
group the tracked affine regions (313) or areas on interest; and
create the virtual markers with information of the apparatus's location and the orientation (204) for the acquired image based on the obtained grouped affine regions.

7. The apparatus of claim 5 or 6, wherein for the determination of the surfaces in the acquired image, the processing circuitry (200, 300) is configured to:
create a point cloud (321) for the acquired image based on the acquired image, the depth map (202) and the orientation and the location (204) of the apparatus when acquiring the image;
collect point clouds of multiple images corresponding to the acquired image and being acquired over, for the apparatus according to claim 5, a time period, or, for the apparatus according to claim 6, over the time period;
process the collected point clouds by a usage of segmentation (322) to obtain a segmented data structure; and
reconstruct the surfaces (323) with, for the apparatus according to claim 5, information of the apparatus's location and the orientation based on the segmented data structure, and for the apparatus according to claim 6, with the information of the apparatus's location and the orientation.

8. The apparatus of claim 7, wherein the segmentation is an Octree segmentation (322) process, and the segmented data structure is an Octree data structure.

9. The apparatus of one of the preceding claims, further comprising an interface (104) and a cache (331) for receiving and storing the pre-calculated 3D models (205) with the virtually marked surfaces.

10. A method (500) for generating an augmented reality representation of an acquired image performed by the processing circuitry (200, 300) of the apparatus of claim 1, wherein the method (500) comprises the following steps performed by the processing circuitry (200, 300):
∘ generating a depth map (202) of the acquired image,
∘ determining surfaces occurring in the acquired image based on the depth map (202) and on data for the apparatus's (10) orientation and location 204 when acquiring the image;
∘ creating virtual markers in the acquired image, each virtual marker representing an area of interest in the acquired image;
∘ mapping the virtual markers to the determined surfaces to derive virtually marked surfaces;
∘ selecting, from a 3D Model Database, a pre-calculated 3D model (205) with virtually marked surfaces based on a geographical position of the apparatus (10) when acquiring an image;
∘ mapping the virtually marked surfaces of the acquired image to corresponding virtually marked surfaces of the selected pre-calculated 3D model (205) to derive a shape scene model (360, 362);
∘ determining lighting conditions for at least one virtual object comprised in an augmented reality presentation, and
∘ generating the augmented reality representation based on the acquired image, the generated depth map (202), the derived shape scene model (360, 362) and the lighting conditions for the at least one virtual object comprised in the augmented reality presentation.

11. A computer program comprising instructions, which, when the computer program is executed by a computer of an apparatus, cause the computer to carry out the method according to claim 10.

## Patentansprüche

1. Vorrichtung, die Folgendes umfasst:
∘ eine Bilderhalteeinheit (101), die zum Erfassen eines Bilds ausgelegt ist;
∘ eine Anzeige (105) zum Darstellen des erfassten Bilds; und
∘ eine Verarbeitungsschaltungsanordnung (200, 300), die zu Folgendem ausgelegt ist:
• Erzeugen einer Tiefenkarte (202) des erfassten Bilds,
• Bestimmen von in dem erfassten Bild vorhandenen Oberflächen basierend auf der Tiefenkarte (202) und auf Daten für die Ausrichtung und den Standort 204 der Vorrichtung (10) bei Erfassung des Bilds;
• Erstellen virtueller Markierungen in dem erfassten Bild, wobei jede virtuelle Markierung einen Bereich von Interesse in dem erfassten Bild repräsentiert;
• Abbilden der virtuellen Markierungen auf die bestimmten Oberflächen, um virtuell markierte Oberflächen abzuleiten;
• Auswählen, aus einer 3D-Modell-Datenbank, eines vorberechneten 3D-Modells (205) mit virtuell markierten Oberflächen basierend auf geografischen Positionen der Vorrichtung (10) bei Erfassung des Bilds;
• Abbilden der virtuell markierten Oberflächen des erfassten Bilds auf entsprechende virtuell markierte Oberflächen des ausgewählten vorberechneten 3D-Modells (205), um ein Formszenenmodell (360, 362) abzuleiten;
• Bestimmen von Beleuchtungsbedingungen für mindestens ein in einer "Augmented-Reality"-Darstellung enthaltenes virtuelles Objekt und
• Erzeugen der "Augmented-Reality"-Darstellung basierend auf dem erfassten Bild, der erzeugten Tiefenkarte (202), dem abgeleiteten Formszenenmodell (360, 362) und der Beleuchtungsbedingungen für das mindestens eine in der "Augmented-Reality"-Darstellung enthaltene virtuelle Objekt.

2. Vorrichtung nach Anspruch 1, ferner umfassend eine Einheit (102) für geografische Positionen, die zum Erhalten der geografischen Position der Vorrichtung bei Erfassung des Bilds ausgelegt ist.

3. Vorrichtung nach Anspruch 1, wobei die Verarbeitungsschaltungsanordnung (200, 300) ferner zum Bestimmen der Beleuchtungsbedingungen basierend auf einer Sonnenlichtschattenabbildungstechnik und/oder einer Umgebungsverdeckungstechnik ausgelegt ist.

4. Vorrichtung nach einem der vorhergehenden Ansprüche, wobei
die Vorrichtung eine Ausrichtungseinheit (103) umfasst, die zum Erhalten der Ausrichtung und des Standorts (204) der Vorrichtung bei Erfassung des Bilds ausgelegt ist; und
die Verarbeitungsschaltungsanordnung (200, 300) ferner zum Erstellen der virtuellen Markierungen in dem erfassten Bild basierend auf der Ausrichtung und dem Standort der Vorrichtung bei Erfassung des Bilds ausgelegt ist.

5. Vorrichtung nach einem der vorhergehenden Ansprüche, wobei:
∘ in einer ersten Alternative die Vorrichtung nach einem der Ansprüche 1-3 eine Ausrichtungseinheit (103) umfasst, die zum Erhalten einer Ausrichtung und eines Standorts (204) der Vorrichtung bei Erfassung des Bilds ausgelegt ist,
∘ in einer zweiten Alternative anstelle der ersten Alternative die Vorrichtung nach Anspruch 4 die Ausrichtungseinheit (103) umfasst, die zum Erhalten der Ausrichtung und des Standorts (204) der Vorrichtung bei Erfassung des Bilds ausgelegt ist; und
∘ in der ersten und zweiten Alternative die Verarbeitungsschaltungsanordnung (200, 300) zum Bestimmen der Oberfläche in dem erfassten Bild basierend auf der Tiefenkarte (202) und der Ausrichtung und dem Standort (204) der Vorrichtung bei Erfassung des Bilds ausgelegt ist.

6. Vorrichtung nach Anspruch 4 oder 5, wobei die Verarbeitungsschaltungsanordnung (200, 300) für die Erstellung der virtuellen Markierungen in dem erfassten Bild zu Folgendem ausgelegt ist:
Erkennen von affinen Regionen (311) oder Bereichen von Interesse in dem erfassten Bild;
Verfolgen von affinen Regionen (112) oder Bereichen von Interesse aus mehreren Bildern, die dem erfassten Bild entsprechen und über einen Zeitraum erfasst werden;
Gruppieren der verfolgten affinen Regionen (313) oder Bereiche von Interesse; und
Erstellen der virtuellen Markierungen mit Informationen des Standorts und der Ausrichtung (204) der Vorrichtung für das erfasste Bild basierend auf den erhaltenen gruppierten affinen Regionen.

7. Vorrichtung nach Anspruch 5 oder 6, wobei die Verarbeitungsschaltungsanordnung (200, 300) für die Bestimmung der Oberflächen in dem erfassten Bild zu Folgendem ausgelegt ist:
Erstellen einer Punktwolke (321) für das erfasste Bild basierend auf dem erfassten Bild, der Tiefenkarte (202) und der Ausrichtung und dem Standort (204) der Vorrichtung bei Erfassung des Bilds;
Sammeln von Punktwolken mehrerer Bilder, die dem erfassten Bild entsprechen und die über, für die Vorrichtung nach Anspruch 5, einen Zeitraum oder, für die Vorrichtung nach Anspruch 6, über den Zeitraum erfasst werden;
Verarbeiten der erfassten Punktwolken durch eine Verwendung von Segmentierung (322), um eine segmentierte Datenstruktur zu erhalten; und
Rekonstruieren der Oberflächen (323) mit, für die Vorrichtung nach Anspruch 5, Informationen des Standorts und der Ausrichtung der Vorrichtung basierend auf der segmentierten Datenstruktur und, für die Vorrichtung nach Anspruch 6, mit Informationen des Standorts und der Ausrichtung der Vorrichtung.

8. Vorrichtung nach Anspruch 7, wobei die Segmentierung ein Prozess einer Octree-Segmentierung (322) ist und die segmentierte Datenstruktur eine Octree-Datenstruktur ist.

9. Vorrichtung nach einem der vorhergehenden Ansprüche, ferner umfassend eine Schnittstelle (104) und einen Cache (331) zum Empfangen und Speichern der vorberechneten 3D-Modelle (205) mit den virtuell markierten Oberflächen.

10. Verfahren (500) zum Erzeugen einer "Augmented-Reality"-Darstellung eines erfassten Bilds, durchgeführt durch die Verarbeitungsschaltungsanordnung (200, 300) der Vorrichtung von Anspruch 1, wobei das Verfahren (500) die durch die Verarbeitungsschaltungsanordnung (200, 300) durchgeführten folgenden Schritte umfasst:
∘ Erzeugen einer Tiefenkarte (202) des erfassten Bilds,
∘ Bestimmen von in dem erfassten Bild vorhandenen Oberflächen basierend auf der Tiefenkarte (202) und auf Daten für die Ausrichtung und den Standort 204 der Vorrichtung (10) bei Erfassung des Bilds;
∘ Erstellen virtueller Markierungen in dem erfassten Bild, wobei jede virtuelle Markierung einen Bereich von Interesse in dem erfassten Bild repräsentiert;
∘ Abbilden der virtuellen Markierungen auf die bestimmten Oberflächen, um virtuell markierte Oberflächen abzuleiten;
∘ Auswählen, aus einer 3D-Modell-Datenbank, eines vorberechneten 3D-Modells (205) mit virtuell markierten Oberflächen basierend auf einer geografischen Position der Vorrichtung (10) bei Erfassung des Bilds;
∘ Abbilden der virtuell markierten Oberflächen des erfassten Bilds auf entsprechende virtuell markierte Oberflächen des ausgewählten vorberechneten 3D-Modells (205), um ein Formszenenmodell (360, 362) abzuleiten;
∘ Bestimmen von Beleuchtungsbedingungen für mindestens ein in einer "Augmented-Reality"-Darstellung enthaltenes virtuelles Objekt und
∘ Erzeugen der "Augmented-Reality"-Darstellung basierend auf dem erfassten Bild, der erzeugten Tiefenkarte (202), dem abgeleiteten Formszenenmodell (360, 362) und der Beleuchtungsbedingungen für das mindestens eine in der "Augmented-Reality"-Darstellung enthaltene virtuelle Objekt.

11. Programm, das Anweisungen umfasst, die bei Ausführung des Computerprogramms durch einen Computer einer Vorrichtung bewirken, dass der Computer das Verfahren nach Anspruch 10 umsetzt.

## Revendications

1. Appareil comprenant :
∘ une unité d'obtention d'image (101) configurée pour acquérir une image ;
∘ un affichage (105) destiné à présenter l'image acquise ; et
∘ une circuiterie de traitement (200, 300) configurée pour :
• générer une carte de profondeur (202) de l'image acquise,
• déterminer des surfaces apparaissant dans l'image acquise sur la base de la carte de profondeur (202) et de données relatives à une orientation et à une localisation (204) de l'appareil (10) lors de l'acquisition de l'image ;
• créer des marqueurs virtuels dans l'image acquise, chaque marqueur virtuel représentant une zone d'intérêt dans l'image acquise ;
• cartographier les marqueurs virtuels sur les surfaces déterminées afin de déduire des surfaces marquées virtuellement ;
• sélectionner, à partir d'une base de données de modèles 3D, un modèle 3D précalculé (205) avec des surfaces marquées virtuellement sur la base d'une position géographique de l'appareil (10) lors de l'acquisition d'une image ;
• cartographier les surfaces marquées virtuellement de l'image acquise sur des surfaces marquées virtuellement correspondantes du modèle 3D précalculé (205) sélectionné afin de déduire un modèle de scène en forme (360, 362) ;
• déterminer des conditions d'éclairage pour au moins un objet virtuel compris dans une représentation en réalité augmentée, et
• générer la représentation en réalité augmentée sur la base de l'image acquise, de la carte de profondeur (202) générée, du modèle de scène en forme (360, 362) déduit et des conditions d'éclairage pour l'au moins un objet virtuel compris dans la représentation en réalité augmentée.

2. Appareil selon la revendication 1, comprenant en outre une unité de position géographique (102) configurée pour obtenir la position géographique de l'appareil lors de l'acquisition de l'image.

3. Appareil selon la revendication 1, dans lequel la circuiterie de traitement (200, 300) est configurée en outre pour déterminer les conditions d'éclairage sur la base d'une technique de cartographie des ombres solaires et/ou d'une technique d'occultation ambiante.

4. Appareil selon l'une des revendications précédentes,
l'appareil comprenant une unité d'orientation (103) configurée pour obtenir l'orientation et la localisation (204) de l'appareil lors de l'acquisition de l'image ; et la circuiterie de traitement (200, 300) étant configurée en outre pour créer les marqueurs virtuels dans l'image acquise sur la base de l'orientation et de la localisation de l'appareil lors de l'acquisition de l'image.

5. Appareil selon l'une des revendications précédentes,
∘ dans une première variante, l'appareil selon l'une quelconque des revendications 1 à 3 comprenant une unité d'orientation (103) configurée pour obtenir une orientation et une localisation (204) de l'appareil lors de l'acquisition de l'image,
∘ dans une deuxième variante, en lieu et place de la première variante, l'appareil selon la revendication 4 comprenant l'unité d'orientation (103) configurée pour obtenir l'orientation et la localisation (204) de l'appareil lors de l'acquisition de l'image ; et
∘ dans la première et la deuxième variante, la circuiterie de traitement (200, 300) étant configurée pour déterminer les surfaces dans l'image acquise sur la base de la carte de profondeur (202) et de l'orientation et de la localisation (204) de l'appareil lors de l'acquisition de l'image.

6. Appareil selon la revendication 4 ou 5, dans lequel, pour la création des marqueurs virtuels dans l'image acquise, la circuiterie de traitement (200, 300) est configurée pour :
reconnaître des régions affines (311) ou des zones d'intérêt dans l'image acquise ;
réaliser le suivi de régions affines (312) ou de zones d'intérêt à partir de plusieurs images correspondant à l'image acquise et acquises sur une période de temps ;
regrouper les régions affines suivies (313) ou les zones d'intérêt suivies ; et
créer les marqueurs virtuels avec des informations sur la localisation et l'orientation (204) de l'appareil pour l'image acquise sur la base des régions affines regroupées obtenues.

7. Appareil selon la revendication 5 ou 6, dans lequel, pour la détermination des surfaces dans l'image acquise, la circuiterie de traitement (200, 300) est configurée pour :
créer un nuage de points (321) pour l'image acquise sur la base de l'image acquise, de la carte de profondeur (202) et de l'orientation et de la localisation (204) de l'appareil lors de l'acquisition de l'image ;
collecter des nuages de points de plusieurs images correspondant à l'image acquise et acquises, pour l'appareil selon la revendication 5, sur une période de temps ou, pour l'appareil selon la revendication 6, sur la période de temps ;
traiter les nuages de points collectés au moyen d'une segmentation (322) afin d'obtenir une structure de données segmentée ; et
reconstruire les surfaces (323) avec, pour l'appareil selon la revendication 5, des informations sur la localisation et l'orientation de l'appareil sur la base de la structure de données segmentée et, pour l'appareil selon la revendication 6, avec les informations sur la localisation et l'orientation de l'appareil.

8. Appareil selon la revendication 7, dans lequel la segmentation est un processus de segmentation Octree (322) et la structure de données segmentée est une structure de données Octree.

9. Appareil selon l'une des revendications précédentes, comprenant en outre une interface (104) et un cache (331) pour recevoir et stocker les modèles 3D précalculés (205) avec les surfaces marquées virtuellement.

10. Procédé (500) de génération d'une représentation en réalité augmentée d'une image acquise, réalisé par la circuiterie de traitement (200, 300) de l'appareil selon la revendication 1, le procédé (500) comprenant les étapes suivantes, réalisées par la circuiterie de traitement (200, 300) :
∘ génération d'une carte de profondeur (202) de l'image acquise,
∘ détermination de surfaces apparaissant dans l'image acquise sur la base de la carte de profondeur (202) et de données relatives à une orientation et à une localisation (204) de l'appareil (10) lors de l'acquisition de l'image ;
∘ création de marqueurs virtuels dans l'image acquise, chaque marqueur virtuel représentant une zone d'intérêt dans l'image acquise ;
∘ cartographie des marqueurs virtuels sur les surfaces déterminées afin de déduire des surfaces marquées virtuellement ;
∘ sélection, à partir d'une base de données de modèles 3D, d'un modèle 3D précalculé (205) avec des surfaces marquées virtuellement sur la base de la position géographique de l'appareil (10) lors de l'acquisition d'une image ;
∘ cartographie des surfaces marquées virtuellement de l'image acquise sur des surfaces marquées virtuellement correspondantes du modèle 3D précalculé (205) sélectionné afin de déduire un modèle de scène en forme (360, 362) ;
∘ détermination de conditions d'éclairage pour au moins un objet virtuel compris dans une représentation en réalité augmentée ; et
∘ génération de la représentation en réalité augmentée sur la base de l'image acquise, de la carte de profondeur (202) générée, du modèle de scène en forme (360, 362) déduit et des conditions d'éclairage pour l'au moins un objet virtuel compris dans la représentation en réalité augmentée.

11. Programme d'ordinateur comprenant des instructions qui, lorsque le programme d'ordinateur est exécuté par un ordinateur d'un appareil, amènent l'ordinateur à mettre en œuvre le procédé selon la revendication 10.
